# EUROPEAN PATENT APPLICATION

(11) **EP 4 304 262 A1**
(43) Date of publication of application: **10.01.2024**
(21) Application number: 21929069.9
(22) Date of filing: 04.03.2021
(51) Int. Cl.: H04W 72/04

(54) **TERMINAL, BASE STATION, WIRELESS COMMUNICATION SYSTEM, AND WIRELESS COMMUNICATION METHOD**

(71) Applicant: NTT DOCOMO, INC., Tokyo 100-6150 (JP)
(72) Inventor: HARADA Hiroki, Tokyo 100-6150 (JP); KUMAGAI Shinya, Tokyo 100-6150 (JP); SHIBAIKE Naoya, Tokyo 100-6150 (JP); NAGATA Satoshi, Tokyo 100-6150 (JP)
(74) Representative: Hoffmann Eitle
(86) International application number: PCT/JP2021/008570
(87) International publication number: WO 2022/185497

(57) **Abstract**

A terminal comprising: a control unit that applies a target subcarrier spacing lower than a specified subcarrier spacing, in a target frequency band that includes at least a portion of a specified frequency range in which the specified subcarrier spacing is defined as a minimum subcarrier spacing or a frequency band lower than the specified frequency range, wherein a frequency use efficiency of the target subcarrier spacing is higher than the frequency use efficiency of the specified subcarrier spacing.

## Description

### [Technical Field]

This disclosure relates to terminals, base stations, radio communication system and radio communication methods that perform radio communication, in particular, terminals, base stations, radio communication system and radio communication methods that apply SCS (Subcarrier Spacing).

### [Background Art]

The 3rd Generation Partnership Project (3GPP) has specified the 5th generation mobile communication system (Also known as 5G, New Radio (NR) or Next Generation (NG)) and is also in the process of specifying the next generation called Beyond 5G, 5G Evolution or 6G.

In the aforementioned 5G, the FR (Frequency Range) 1 is expected to use 15 kHz, 30 kHz, and 60 kHz SCS (Subcarrier Spacing), and the FR 2 is expected to use 60 kHz and 120 kHz SCS (For example, non-patent literature 1).

### [Citation List]

### [Non-Patent Literature]

3GPP TS 38.101-1 V 17.0.0 3rd Generation Partnership Project; Technical Specification Group Radio Access Network; NR; User Equipment (UE) radio transmission and reception; Unit 1: Range 1 Standalone (Release 17), 3GPP, December 2020

### [Summary of Invention]

Against this background, the inventors, after careful study, found the possibility of improving the frequency utilization efficiency by using a lower SCS than the existing SCS.

Therefore, the present invention was made in view of this situation, and aims to provide terminals, base stations, radio communication system, and radio communication methods that can improve the frequency utilization efficiency.

One aspect of disclosure is a terminal comprising: a control unit that applies a target subcarrier spacing lower than a specified subcarrier spacing, in a target frequency band that includes at least a portion of a specified frequency range in which the specified subcarrier spacing is defined as a minimum subcarrier spacing or a frequency band lower than the specified frequency range, wherein a frequency use efficiency of the target subcarrier spacing is higher than the frequency use efficiency of the specified subcarrier spacing.

One aspect of disclosure is a base station comprising: a control unit that applies a target subcarrier spacing lower than a specified subcarrier spacing, in a target frequency band that includes at least a portion of a specified frequency range in which the specified subcarrier spacing is defined as a minimum subcarrier spacing or a frequency band lower than the specified frequency range, wherein a frequency use efficiency of the target subcarrier spacing is higher than the frequency use efficiency of the specified subcarrier spacing.

One aspect of disclosure is a radio communication system comprising: a terminal; and a base station, wherein the terminal and the base station apply a target subcarrier spacing lower than a specified subcarrier spacing, in a target frequency band that includes at least a portion of a specified frequency range in which the specified subcarrier spacing is defined as a minimum subcarrier spacing or a frequency band lower than the specified frequency range, wherein a frequency use efficiency of the target subcarrier spacing is higher than the frequency use efficiency of the specified subcarrier spacing.

One aspect of disclosure is a radio communication method comprising: a step of applying a target subcarrier spacing lower than a specified subcarrier spacing, in a target frequency band that includes at least a portion of a specified frequency range in which the specified subcarrier spacing is defined as a minimum subcarrier spacing or a frequency band lower than the specified frequency range, wherein a frequency use efficiency of the target subcarrier spacing is higher than the frequency use efficiency of the specified subcarrier spacing.

### [Brief Description of Drawings]

Fig.1: Fig.1 is the overall schematic configuration of radio communication system 10.
Fig.2: Fig.2 shows the frequency range used in radio communication system 10.
Fig.3: Fig.3 shows an example configuration of the radio frame, subframe and slot used in radio communication system 10.
Fig.4: Fig.4 shows a functional block configuration of the UE 200.
Fig.5: Fig.5 shows a functional block configuration of the gNB 100.
Fig.6: Fig.6 is a diagram for illustrating the background.
Fig.7: Fig.7 is a diagram for illustrating the symbol boundaries.
Fig.8: Fig.8 is a diagram for illustrating the symbol boundaries.
Fig.9: Fig.9 shows an example of the hardware configuration of the gNB 100 and the UE 200.

### [Modes for Carrying out the Invention]

Exemplary embodiments of the present invention are explained below with reference to the accompanying drawings. Identical functions and configurations are denoted by the same or similar symbols and their descriptions are omitted as appropriate.

### [Embodiments]

### (1) Overall schematic configuration of the radio communication system

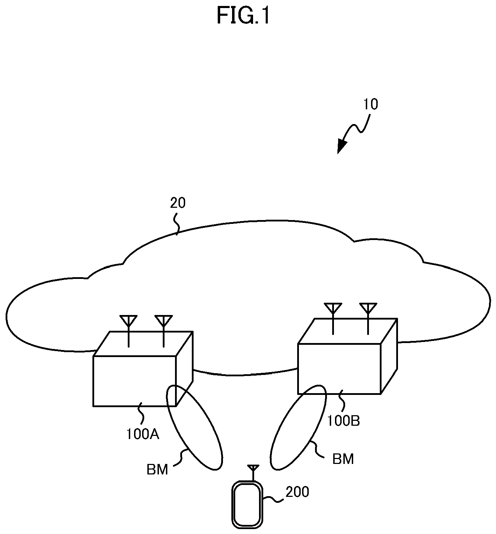

Fig.1 is the overall schematic configuration of a radio communication system 10 according to the embodiment. The radio communication system 10 is a radio communication system according to 5G New Radio (NR) and includes the Next Generation-Radio Access Network 20 (NG-RAN 20, and Terminal 200 (Below, UE 200).

The radio communication system 10 may be a radio communication system according to a scheme called Beyond 5G, 5G Evolution or 6G.

The NG-RAN 20 includes a radio base station 100 A (Below: gNB 100 A) and a radio base station 100 B (Less than or equal to gNB 100 B). The specific configuration of radio communication system 10 including the number of gNBs and UEs is not limited to the example shown in Fig.1.

The NG-RAN 20 actually includes multiple NG-RAN nodes, specifically, gNBs (or ng-eNBs), and is connected to a core network (5GC, not shown) in accordance with 5G. Note that the NG-RAN 20 and 5GCs may simply be described as a network.

The gNB 100 A and gNB 100 B are radio base stations in accordance with 5G and perform radio communication in accordance with the UE 200 and 5G. The gNB 100 A, gNB 100 B and UE 200 are capable of supporting Massive MIMO (Multiple-Input Multiple-Output) which generates a more directional beam BM by controlling radio signals transmitted from multiple antenna elements, carrier aggregation (CA) which uses multiple component carriers (CCs) bundled together, and dual connectivity (DC) which communicates with two or more transport blocks simultaneously between the UE and each of the two NG-RAN nodes.

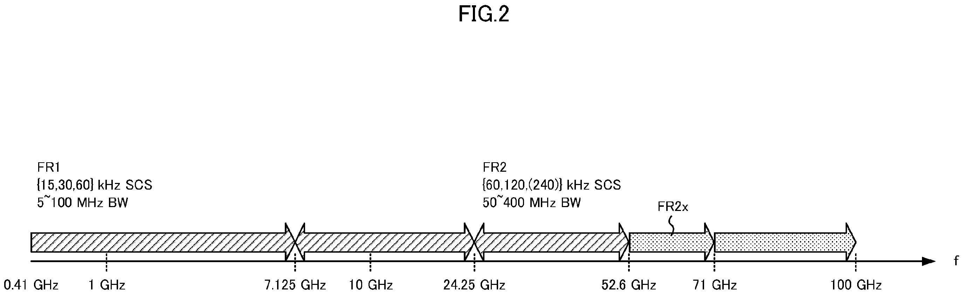

The radio communication system 10 also supports multiple frequency ranges (FRs). Fig.2 shows the frequency ranges used in the radio communication system 10.

As shown in Fig.2, radio communication system 10 corresponds to FR1 and FR2. The frequency bands of each FR are as follows:
- FR 1: 410 MHz to 7.125 GHz
- FR 2: 24.25 GHz to 52.6 GHz

FR 1 may use sub-carrier spacing (SCS) of 15, 30 or 60 kHz and a bandwidth (BW) of 5 ~ 100 MHz. FR 2 is a higher frequency than FR 1, an SCS of 60 or 120 kHz (240 kHz may be included) may be used and a bandwidth (BW) of 50 ~ 400 MHz may be used.

SCS may be interpreted as numerology. Numerology is defined in 3GPP TS 38.300 and corresponds to one subcarrier spacing in the frequency domain.

In addition, the radio communication system 10 corresponds to a higher frequency band than that of FR 2. Specifically, the radio communication system 10 corresponds to a frequency band above 52.6 GHz and up to 71 GHz or 114.25 GHz. Such a high frequency band may be referred to as "FR 2x" for convenience.

Due to the greater influence of phase noise in the high frequency band, Cyclic Prefix-Orthogonal-Frequency Division Multiplexing (CP-OFDM)/Discrete Fourier Transform-Spread (DFT-S-OFDM) with larger Sub-Carrier Spacing (SCS) may be applied when using bands above 52.6 GHz.

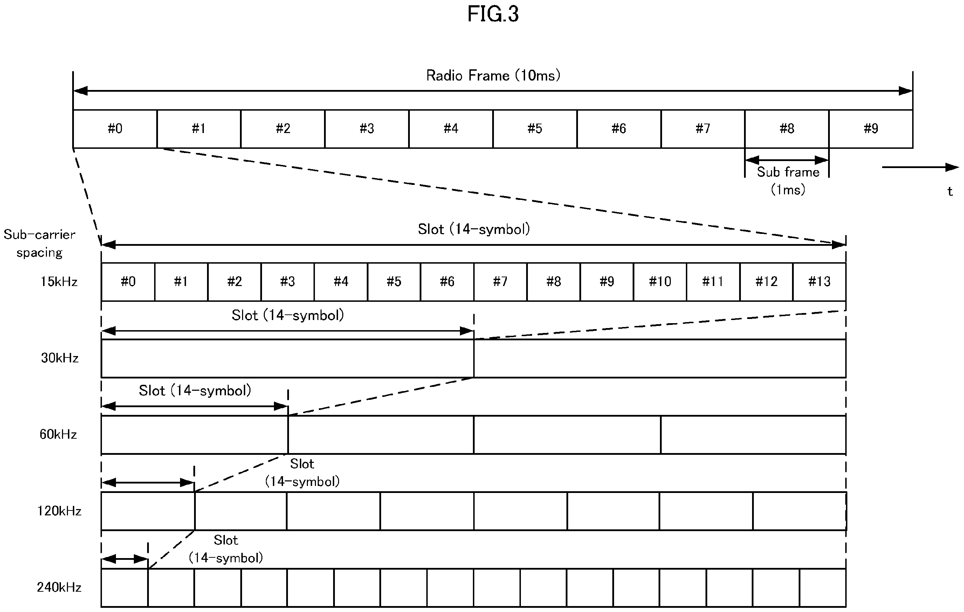

Fig.3 shows an example configuration of radio frames, subframes and slots used in the radio communication system 10.

As shown in Fig.3, one slot consists of 14 symbols, and the larger (wider) the SCS, the shorter the symbol period (and slot period). The SCS is not limited to the interval (frequency) shown in Fig.3. For example, 480 kHz, 960 kHz, etc. may be used.

In addition, the number of symbols constituting 1 slot need not necessarily be 14 symbols (For example, 28, 56 symbols). Furthermore, the number of slots per subframe may vary depending on the SCS.

Note that the time direction (t) shown in Fig.3 may be referred to as a time domain, symbol period or symbol time. The frequency direction may also be referred to as a frequency domain, resource block, subcarrier or bandwidth part (BWP).

DMRS is a type of reference signal that is prepared for various channels. Here, unless otherwise noted, DMRS for the downlink data channel, specifically PDSCH (Physical Downlink Shared Channel), may be used. However, the upstream data channel, specifically DMRS for PUSCH (Physical Uplink Shared Channel), may be interpreted in the same way as DMRS for PDSCH.

DMRS may be used for channel estimation in a device, e.g., as part of coherent demodulation, in UE 200. DMRS may only reside in resource blocks (RBs) used for PDSCH transmission.

DMRS may have multiple mapping types. Specifically, DMRS has mapping type A and mapping type B. In mapping type A, the first DMRS is placed on the second or third symbol of the slot. In mapping type A, the DMRS may be mapped relative to the slot boundary regardless of where the actual data transmission begins in the slot. The reason the first DMRS is placed on the second or third symbol of the slot may be interpreted as placing the first DMRS after the control resource sets (CORESET).

In mapping type B, the first DMRS may be placed on the first symbol of the data allocation. That is, the position of the DMRS may be given relative to where the data is placed, not relative to the slot boundary.

In addition, the DMRS may have multiple types (Types). Specifically, the DMRS has Type 1 and Type 2. Type 1 and Type 2 differ in the maximum number of mapping and orthogonal reference signals in the frequency domain. Type 1 can output up to four orthogonal signals with single-symbol DMRS, and Type 2 can output up to eight orthogonal signals with double-symbol DMRS.

(2) Radio communication system functional block configuration Next, the functional block configuration of the radio communication system 10 will be described.

First, the functional block configuration of the UE 200 will be described.

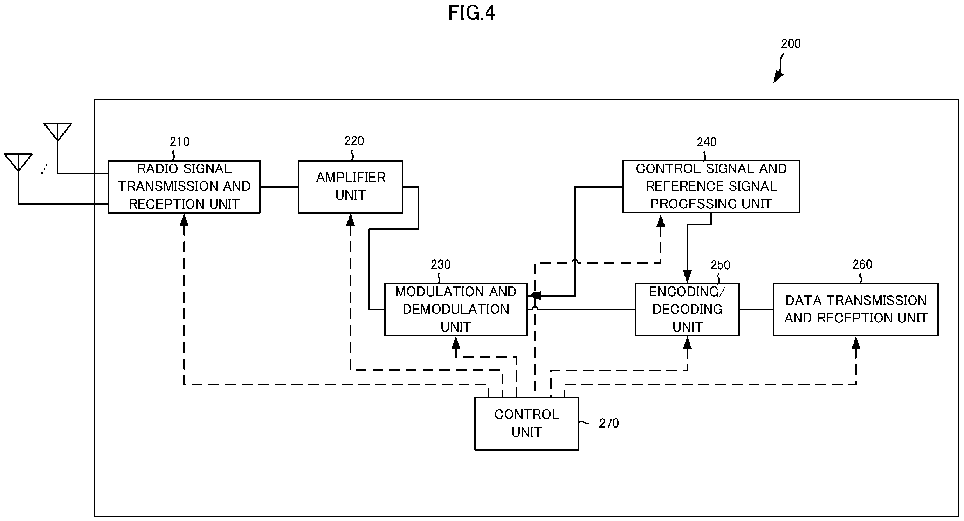

Fig.4 is a functional block configuration diagram of the UE 200. As shown in Fig.4, the UE 200 comprises radio a signal transmission and reception unit 210, an amplifier unit 220, a modulation and demodulation unit 230, a control signal and reference signal processing unit 240, an encoding/decoding unit 250, a data transmission and reception unit 260 and a control unit 270.

The radio signal transmission and reception unit 210 transmits and receives radio signals in accordance with NR. The radio signal transmission and reception unit 210 supports Massive MIMO, CA for bundling multiple CCs, and DC for simultaneously communicating between UE and each of the 2 NG-RAN nodes.

The amplifier unit 220 is composed of PA (Power Amplifier)/LNA (Low Noise Amplifier), etc. The amplifier unit 220 amplifies the signal output from modulation and the demodulation unit 230 to a prescribed power level. The amplifier unit 220 amplifies the RF signal output from the radio signal transmission and reception unit 210.

The modulation and demodulation unit 230 performs data modulation/demodulation, transmission power setting and resource block allocation for each predetermined communication destination (gNB 100 or other gNB). On the modulation and demodulation unit 230, Cyclic Prefix-Orthogonal-Frequency Division Multiplexing (CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing for various control signals transmitted and received by the UE 200 and processing for various reference signals transmitted and received by the UE 200.

Specifically, the control signal and reference signal processing unit 240 receives various control signals transmitted from the gNB 100 via a predetermined control channel, such as control signals of a radio resource control layer (RRC). The control signal and reference signal processing unit 240 also transmits various control signals toward the gNB 100 via a predetermined control channel.

The control signal and reference signal processing unit 240 performs processing using a reference signal (RS) such as a Demodulation Reference Signal (DMRS) and a Phase Tracking Reference Signal (PTRS).

DMRS is a known reference signal (pilot signal) between individual base stations and terminals for estimating a fading channel used for data demodulation. PTRS is a reference signal for individual terminals for estimating phase noise, which is a problem in high frequency bands.

In addition to DMRS and PTRS, the reference signal may include Channel State Information-Reference Signal (CSI-RS), Sounding Reference Signal (SRS), and Positioning Reference Signal (PRS) for location information.

In addition, the channel includes a control channel and a data channel. The control channels include PDCCH (Physical Downlink Control Channel), PUCCH (Physical Uplink Control Channel), RACH (Random Access Channel), Downlink Control Information (DCI) including Random Access Radio Network Temporary Identifier (RA-RNTI), and Physical Broadcast Channel (PBCH).

The data channels include PDSCH (Physical Downlink Shared Channel) and PUSCH (Physical Uplink Shared Channel). Data means data transmitted through a data channel. Data channels may be read as shared channels.

Here, the control signal and reference signal processing unit 240 may receive downlink control information (DCI). The DCI includes fields for storing, as existing fields, DCI Formats, Carrier indicator (CI), BWP indicator, Frequency Domain Resource Allocation (FDRA), Time Domain Resource Allocation (TDRA), Modulation and Coding Scheme (MCS), HARQ Process Number (HPN), New Data Indicator (NDI), Redundancy Version (RV), etc.

The values stored in the DCI Format fields are information elements that specify the format of the DCI. The values stored in the CI fields are information elements that specify the CC to which the DCI applies. The values stored in the BWP indicator fields are information elements that specify the BWP to which the DCI applies. The BWP that can be specified by the BWP indicator is set by an information element (BandwidthPart-Config) contained in the RRC message. The value stored in the FDRA field is an information element that specifies the frequency domain resource to which the DCI applies. Frequency domain resources are identified by the value stored in the FDRA field and the information element (RA Type) contained in the RRC message. The value stored in the TDRA field is the information element that specifies the time domain resource to which the DCI applies. The time domain resource is identified by the value stored in the TDRA field and the information element (pdsch-TimeDomainAllocationList, pusch-TimeDomainAllocationList) contained in the RRC message. The time domain resource may be identified by the value stored in the TDRA field and the default table. The value stored in the MCS field is the information element that specifies the MCS to which the DCI applies. The MCS is identified by the value stored in the MCS and the MCS table. The MCS table may be specified by an RRC message or identified by RNTI scrambling. The value stored in the HPN field is an information element that specifies the HARQ Process to which the DCI applies. The value stored in the NDI is an information element that specifies whether the data to which the DCI applies is first-time data. The value stored in the RV field is an information element that specifies the redundancy of the data to which the DCI applies.

The encoding/decoding unit 250 performs data division/concatenation and channel coding/decoding for each predetermined communication destination (gNB 100 or other gNB).

Specifically, the encoding/decoding unit 250 divides the data output from the data transmission and reception unit 260 into predetermined sizes and performs channel coding on the divided data. The encoding/decoding unit 250 also decodes the data output from modulation and the demodulation unit 230 and concatenates the decoded data.

The data transmission and reception unit 260 transmits and receives protocol data units (PDU) and service data units (SDU). Specifically, the data transmission and reception unit 260 performs assembly/disassembly of PDUs/SDUs in multiple layers (Media access control layer (MAC), radio link control layer (RLC), and packet data convergence protocol layer (PDCP), etc.). data transmission and reception unit 260 also performs error correction and retransmission control of data based on HARQ (Hybrid Automatic Repeat Request).

The control unit 270 controls each functional block that makes up the UE 200. In an embodiment, the control unit 270 constitutes a control unit that applies a targeted subcarrier spacing (The following are eligible SCS) lower than the specified SCS in a targeted frequency band that includes at least a portion of the specified frequency range, or a frequency band lower than the specified frequency range, for which the specified subcarrier spacing (below, specific SCS) is defined as the minimum subcarrier spacing (Less than or equal to minimum SCS). The frequency use efficiency of the targeted SCS is higher than that of the specified SCS.

For example, the specified frequency range may be FR1 as described above. In such a case, the specified SCS may be 15 kHz. The frequency band of interest may include at least a portion of FR1. The frequency band of interest may include a frequency band lower than FR1. The target SCS may be an SCS (For example, 7.5 kHz, 3.75 kHz, 1.875 kHz, etc.) that satisfies the condition of 1/2ⁿ (where n is a positive integer) of the specific SCS (For example, 15 kHz) and may also be an SCS that does not satisfy the condition of 1/2ⁿ of the specific SCS.

Second, the functional block configuration of gNB 100 will be described.

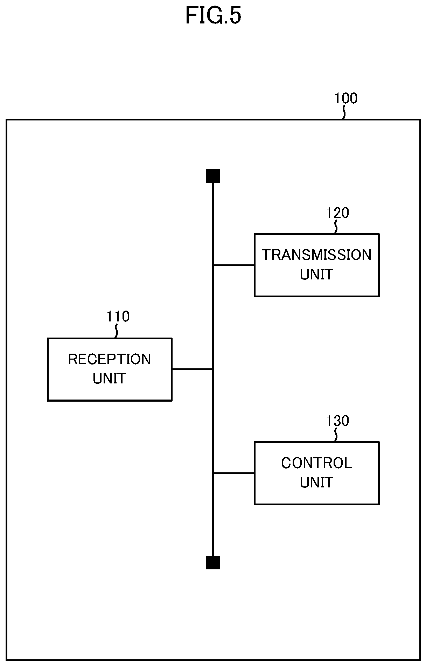

Fig.5 is a functional block configuration diagram of gNB 100. As shown in Fig.5, gNB 100 has reception unit 110, transmission unit 120 and control unit 130.

reception unit 110 receives various signals from UE 200. reception unit 110 may receive UL signals via PUCCH or PUSCH.
transmission unit 120 transmits various signals to the UE 200. transmission unit 120 may transmit DL signals via PDCCH or PDSCH.
control unit 130 controls the gNB 100. In an embodiment, control unit 130 constitutes a control unit that applies a target SCS lower than the specified SCS in a target frequency band that includes at least a portion of the specified frequency range, or a frequency band lower than the specified frequency range, for which the specified SCS is defined as the minimum SCS. As described above, the frequency use efficiency of the target SCS is higher than that of the specified SCS.

### (3) Background

The background of the embodiment is described below. CBW (Channel Bandwidth) is described here.

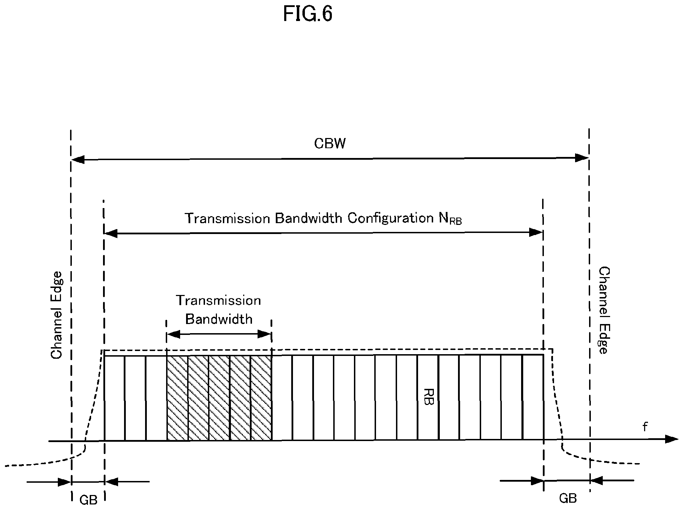

Specifically, as shown in Fig.6, both ends of the CBW are provided with a GB (Guard Band), and the band in the CBW except the GB is the band that can be used for transmission. Such a band is set by the number of RB (Resource Blocks) (Transmission Bandwidth Configuration N_{RB} in Fig.6). The active RB (Transmission Bandwidth) used for actual transmission is set from among the Transmission Bandwidth Configuration N_{RB}s. Transmission Bandwidth may be referred to as BWP (Bandwidth Part).

First, in the existing scheme, the ratio of Cyclic Prefix (CP) lengths (Below, CP Ratio) is the same regardless of SCS. For example, the CP ratio of Normal CP (Below, NCP) is 144 (160)/2048 (about 6.6%). The CP ratio of Extended CP is 512/2048 (20%).

Second, in the existing scheme, the higher the SCS, the larger the GB and the more bandwidth that is not available in the CBW. For example, if the CBW is 50 MHz, the bandwidth that is available in the CBW is as follows: At 15 kHz SCS, the available bandwidth is 48.6 MHz (= 270 RB * 12 SC (Subcarrier) * 15 kHz) and the percentage of available bandwidth is 97.2% (48.6 MHz/50 MHz). At 30 kHz SCS, the available bandwidth is 47.88 MHz (= 133 RB * 12 SC * 30 kHz) and the percentage of available bandwidth is 95.76% (47.88 MHz/50 MHz). At 60 kHz SCS, the available bandwidth is 46.8 (47.52) MHz (= 65 RB * 12 SC * 60 kHz) and the percentage of available bandwidth is 93.6 (95.04)% (46.8 (47.52) MHz/50 MHz). At 120 kHz SCS, the available bandwidth is 46.08 MHz (= 32 RB * 12 SC * 30 kHz) and the percentage of available bandwidth is 92.16% (46.08 MHz/50 MHz).

Third, the existing scheme limits CBW per SCS. For example, in a 15 kHz SCS, the CBW limit is 50 MHz.

Against this background, the inventors, after careful consideration, have found that frequency use efficiency can be improved by introducing a lower SCS than the specific SCS specified in FR1 (For example, 15 kHz) in the target frequency band, which includes at least a portion of the specific frequency range (For example, FR1) or a frequency band lower than the specific frequency range.

### (4) Assumed Case

The assumed case of the embodiment is described below. In the following, the case where the specific frequency range is FR1, the specific SCS is 15 kHz, and the target SCS is 7.5 kHz is illustrated. In the assumed case, the case where the 7.5 kHz SCS is introduced in the target frequency band, which includes at least a portion of FR1 or a frequency band lower than FR1, is illustrated.

However, the target SCS may be an SCS (For example, 7.5 kHz, 3.75 kHz, 1.875 kHz, etc.) that satisfies the condition of 1/2ⁿ (n is a positive integer) of the specific SCS (For example, 15 kHz), or an SCS that does not satisfy the condition of 1/2ⁿ of the specific SCS either.

### (4.1) CP Ratio

The cyclic prefix length ratio (CP Ratio) used in the target SCS (7.5 kHz) may be lower than the cyclic prefix length ratio (CP Ratio of NCP) used in the specific SCS (15 kHz).

Here, the delay spread resolved by the CP is not dependent on the SCS but is determined by the frequency band and the stationary scenario. Therefore, even if the CP ratio applied to the target SCS is lower than that of the existing NCP, the delay spread can be properly resolved, and the frequency utilization efficiency can be enhanced.

### (4.2) Number of FFT points

The number of FFT (Fast Fourier Transform) points used in the target SCS may be more than the number of FFT points used in the specific SCS. For example, the number of FFT points used in the target SCS may be 8192 while the number of FFT points used in the specific SCS is 4096.

According to such a configuration, even if an SCS lower than the specific SCS (For example, 15 kHz) specified in FR1 is introduced, it is possible to use a broadband CBW as the CBW, thus enhancing the frequency utilization efficiency. Furthermore, since a broadband CBW can be used as the CBW, it is possible to suppress the increase in the number of CCs in CA.

A larger number of RBs per BW than the maximum number of RBs in a particular SCS (For example, 273) may be supported. In such cases, a new FDRA field containing more bits than the existing number of bits may be defined. Alternatively, without changing the number of bits in the FDRA field from the existing number of bits, the bits may be interpreted as if the granularity of the frequency resource represented by the bits included in the FDRA field is smaller than the existing granularity. Alternatively, a table defining the allocation of the frequency resources applicable to the target SCS and/or the frequency resource allocation method may be predefined in radio communication system 10.

The gNB 100 may support more FFT points than the number of FFT points used in the specific SCS, and the UE 200 may not support more FFT points than the number of FFT points used in the specific SCS. In such a case, the UE 200 may not assume that the BWP of the target SCS is allocated across the CBW supported by the gNB 100. Also, if the UE 200 supports more FFT points than the number of FFT points used in the specific SCS, the information may be reported to the gNB 100.

### (4.3) Application conditions

Conditions for applying the subject subcarrier spacing may be specified. Application conditions may include conditions such as band, frequency range, duplex mode, serving cell type, etc. for applying the subject subcarrier spacing. For example, application conditions may include conditions for applying the subject subcarrier spacing to the BWP of a SCell (Secondary Cell).

### (4.4) UE Capability

UE Capability may be defined that implicitly or explicitly indicates whether the UE 200 corresponds to the subject subcarrier spacing. For example, a terminal type such as an IoT terminal (reduced capability), IAB (IAB-MT)-MT (Mobile Termination), or FWA (Fixed Wireless Access) terminal may implicitly indicate whether the UE 200 corresponds to the subject subcarrier spacing. Other information elements included in the UE Capability may implicitly indicate whether the UE 200 corresponds to the subject subcarrier spacing.

### (4.5) Symbol Boundaries

The symbol boundary of a specific SCS may coincide with the symbol boundary of the target SCS at a specific time interval. The specific time interval may be 0.5 ms or 1.0 ms. For example, in a time interval corresponding to 1 Slot (14-Symbol) of a specific SCS, a case in which 8 symbols are included as symbols of the target SCS is illustrated. The symbol of 8 is realized by the CP Ratio being lower than that of the NPC. It should be noted that when the CP Ratio is the same as that of the NPC, the symbol of 7 is included as the symbol of the target SCS in the time interval corresponding to 1 Slot (14-Symbol) of the specific SCS. Under such a premise, the symbol boundary may be defined as follows:

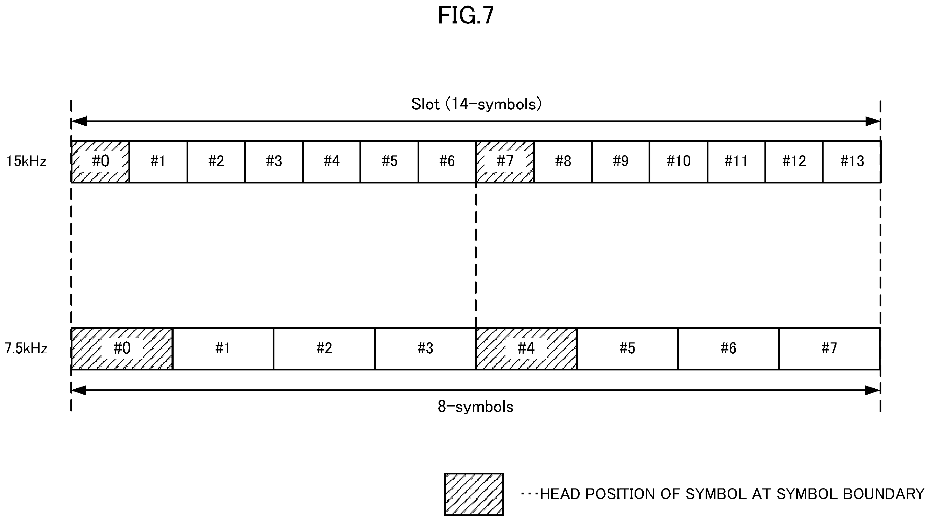

First, as shown in Fig.7, the symbol boundary of a specific SCS (15 kHz) and that of a target SCS (7.5 kHz) may be matched every 0.5 ms (That is, four symbols of the target SCS). That is, the head position of symbol #0 of the specific SCS and the head position of symbol #0 of the target SCS may be aligned, and the head position of symbol #7 of the specific SCS and the head position of symbol #4 of the target SCS may be aligned. In the case shown in Fig.7, the CP Ratio must be lower than that of the NPC because the number of symbols of the target SCS included in the time interval corresponding to 1 Slot (14-Symbol) of the specific SCS must be even.

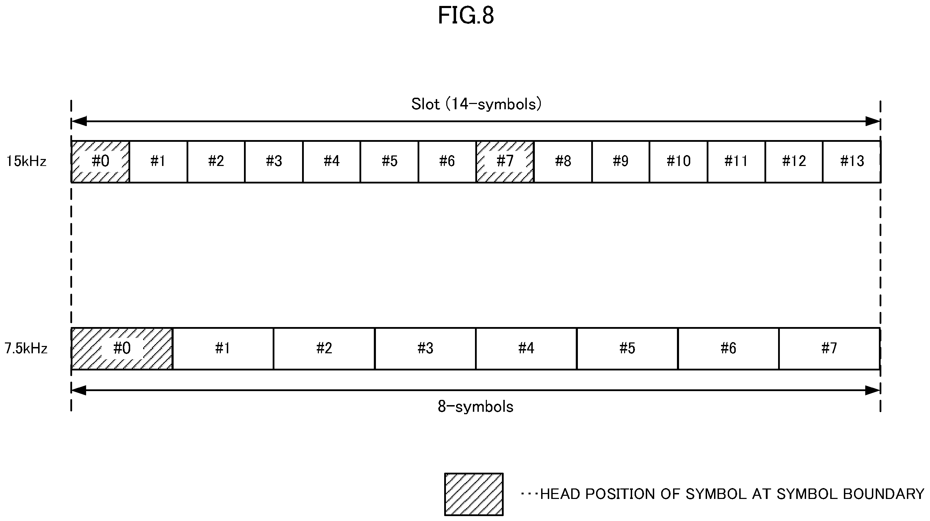

Second, as shown in Fig.8, the symbol boundaries of a specific SCS (15 kHz) and that of a target SCS (7.5 kHz) may be matched every 1.0 ms (i.e., 8 symbols of the target SCS). That is, the head position of symbol #0 of the specific SCS and the head position of symbol #0 of the target SCS are aligned, but the head position of symbol #7 of the specific SCS and the head position of symbol #4 of the target SCS may not be aligned. In the case shown in Fig.8, the CP Ratio need not be lower than the CP Ratio of the NPC because the number of symbols of the target SCS included in the time interval corresponding to 1 Slot (14-Symbol) of the specific SCS need not be even.

In this example, the case where the symbol boundary of the specific SCS and the symbol boundary of the target SCS coincide in the time interval equal to or less than 1 Slot of the specific SCS is illustrated, but the embodiment is not limited to this. The symbol boundary of the specific SCS and the symbol boundary of the target SCS may coincide in the time interval longer than 1 Slot of the specific SCS.

### (4.6) UE Processing timeline

When the target SCS is applied, a new time may be defined as the UE Processing timeline. Alternatively, when the target SCS is applied, the UE Processing timeline used in the specific SCS may be used as the UE Processing timeline.

The UE Processing timeline may include one or more Processing timelines selected from the following: PDSCH processing timeline (N1), PUSCH processing timeline (N2), HARQ-ACK multiplexing timeline (N3), CSI processing time (Z1, Z2, Z3), BWP switching delay, Beam switching delay, minimum gap for scheduling, and minimum gap for triggering.

Here, it should be noted that according to conventional techniques, the lower the SCS, the longer the absolute time is defined as the Processing timeline. The embodiment focuses on the possibility that the longer the absolute time is not required to define the Processing timeline when the target SCS is applied. Such possibility is the possibility that the evolution of device performance is taken into consideration.

### (4.7) RS (Reference Signal)

When the target SCS is applied, new resource location, density and setting parameters may be defined as the resource location, density and setting parameters of RS.

Specifically, because the target SCS is lower than the specific SCS, the insertion density of RS in the frequency direction for the target SCS may be lower than the insertion density of RS in the frequency direction for the specific SCS. Since the symbol length of the target SCS is longer than the symbol length of the specific SCS, the insertion density of RS in the time direction for the target SCS may be higher than the insertion density of RS in the time direction for the specific SCS.

For example, as the configuration type of DMRS set when the target SCS is applied, a new type with a lower insertion density of DMRS in the frequency direction than the existing technology may be defined. Or, as the PTRS set when the target SCS is applied, a PTRS with a lower insertion density in the frequency direction than the existing technology may be defined.

### (4.8) Number of symbols

The number of symbols contained in 1 Slot of a subject SCS may differ from the number of symbols contained in 1 Slot of a specific SCS (For example, 14). This is because it is necessary to newly define the definition of 1 Slot of a subject SCS and the number of symbols contained in 1 Slot of a subject SCS by lowering the CP Ratio applied to the subject SCS.

For example, if 1 Slot is defined to be 2 ms, then 16 or 15 symbols may be included in 2 ms. If 1 Slot is defined to be 1 ms, then 8 symbols may be included in 1 ms. If 1 Slot is defined to be 0.5 ms, then 4 symbols may be included in 0.5 ms.

In such cases, a TDRA field containing more bits than the existing number of bits may be newly defined. Alternatively, without changing the number of bits in the TDRA field from the existing number of bits, the bits may be interpreted as if the granularity of the frequency resource represented by the bits included in the TDRA field is smaller than the existing granularity. Alternatively, a table and/or time resource allocation method defining the allocation of time resources applicable to the target SCS may be predefined in radio communication system 10.

DL, FL and UL may be settable for symbols included in the target SCS. DL means the symbol used for DL, UL means the symbol used for UL and FL means the symbol used for either DL or UL. DL, FL and UL may be set by RRC parameters and some of them (e.g., the symbol designated FL by RRC) may be updated by DCI or MAC CE.

A new Slot format may be defined as the format of the Slot used by the target SCS. Alternatively, the format of the Slot used by the target SCS may be identified by a change in the interpretation of the existing Slot format. The existing Slot format specified in Table 11.1.1-1 of 3GPP TS 38.213 V 16.4.0 may be used. For example, if 1 Slot of the target SCS contains less than 14 symbols, a portion of the existing Slot format may be extracted. If 1 Slot of the target SCS contains more than 14 symbols, additional symbols may be inserted into the existing Slot format. The type of additional symbol (DL, FL, UL) may be identified by a parameter notified separately from the existing Slot format, or by the type of symbol included in the existing Slot format.

### (5) Action and Effect

In the embodiment, UE 200 and gNB 100 apply a target SCS lower than the specific SCS in the target frequency band that includes at least a portion of FR1 or a frequency band lower than FR1 in which the specific SCS (minimum SCS) is defined. The frequency use efficiency of the target SCS is higher than that of the specific SCS. With such a configuration, the frequency use efficiency can be improved by newly introducing the target SCS.

### (6) Modification Example 1

Modification Example 1 of the embodiment will be described below. The differences from the embodiment will be mainly described below.

In the embodiment, the case where the specific frequency range is FR1, the specific SCS is 15 kHz, and the target frequency band includes at least a portion of FR1 or a frequency band lower than FR1 is described. On the other hand, in the modification example 1, the specific frequency range is FR2, the specific SCS is 60 kHz, and the target frequency band includes at least a portion of FR2 or a frequency band lower than FR2.

In the modification example 1, the target SCS may be an SCS (For example, 30 kHz, 15 kHz, etc.) that satisfies the condition of 1/2ⁿ (where n is a positive integer) of the specific SCS (For example, 60 kHz) or an SCS that does not satisfy the condition of 1/2ⁿ of the specific SCS. Even in such a case, one or more configurations selected from the above (4.1) CP Ratio, (4.2) FFT point count, (4.3) application conditions, (4.4) UE capability, (4.5) symbol boundary, (4.6) UE Processing timeline, (4.7) RS and (4.8) symbol count may be applied.

Under such a premise, when the SCS applicable in FR1 (15 kHz, 30 kHz) is used as the target SCS, the configuration similar to the SCS applicable in FR1 may be applied. Alternatively, even when the SCS applicable in FR1 (15 kHz, 30 kHz) is used as the target SCS, a configuration different from the SCS applicable in FR1 (at least one of the aforementioned (4.1)-(4.8)) may be applied.

### (7) Other Embodiments

Although the contents of the present invention have been described above in accordance with the embodiment, it is obvious to those skilled in the art that the present invention is not limited to these descriptions and that various modifications and improvements are possible.

In the embodiment, terms such as specific SCS, specific frequency range, target frequency band, and target SCS were used to explain. However, the embodiment is not limited to this. "Specific" may be read as "First" and "Subject" as "Second." Alternatively, "Specific" may be read as "Existing" and "Subject" may be read as "New." Alternatively, "Subject" may be read as "Low."

In the embodiment, a case is described in which the number of FFT points used in the subject SCS is greater than the number of FFT points used in the specific SCS under the conditions for applying the subject SCS lower than the specific SCS in the subject frequency band that includes at least a part of the specific frequency range in which the specific SCS is defined as the minimum SCS or a frequency band lower than the specific frequency range. However, the embodiment is not limited to this. For example, the UE 200 and gNB 100 may support a higher number of FFT points than the existing number of FFT points (4096) even if the subject SCS is not introduced. With such a configuration, a 100 MHz CWB can support a 15 kHz SCS, which may improve frequency utilization efficiency.

The block diagram (Figs. 4 and 5) used for the description of the above embodiment shows a block of functional units. Those functional blocks (structural components) can be realized by a desired combination of at least one of hardware and software. Means for realizing each functional block is not particularly limited. That is, each functional block may be realized using a single physically or logically coupled device, or two or more physically or logically separated devices may be directly or indirectly (For example, using wired, wireless, etc.) connected and realized using these multiple devices. The functional block may be realized by combining the software with the one device or the multiple devices.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that makes transmission work is called a transmission unit (transmitting unit) or transmitter. In either case, as described above, the implementation method is not particularly limited.

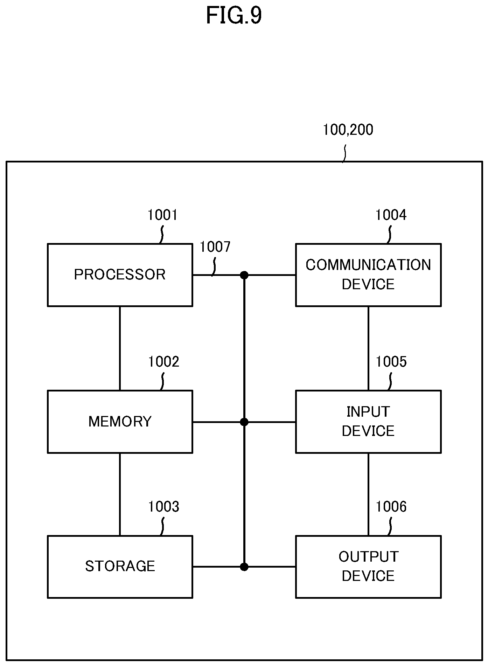

Furthermore, the above-mentioned gNB 100 and UE 200 (the device) may function as a computer for processing the radio communication method of the present disclosure. Fig.9 shows an example of the hardware configuration of the device. As shown in Fig.9, the device may be configured as a computer device including a processor 1001, a memory 1002, a storage 1003, a communication device 1004, an input device 1005, an output device 1006, a bus 1007, etc.

Furthermore, in the following explanation, the term "device" can be replaced with a circuit, device, unit, and the like. The hardware configuration of the device may be configured to include one or more of each device shown in the figure, or it may be configured without some devices.

Each functional block of the device (see Fig.4) is realized by any hardware element of the computer device, or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001, for example, operates an operating system to control the entire computer. The processor 1001 may consist of a central processing unit (CPU) including interfaces with peripheral devices, controllers, arithmetic units, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Furthermore, the various processes described above may be performed by one processor 1001 or simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, etc. Memory 1002 may store programs (program code), software modules, etc., that are capable of executing a method according to one embodiment of this disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device such as a processor 1001 and a memory 1002 is connected by a bus 1007 for communicating information. The bus 1007 may be configured using a single bus or different buses for each device.

In addition, the device may include hardware such as a microprocessor, a digital signal processor (DSP), an application specific integrated circuit (ASIC), a programmable logic device (PLD), or a field programmable gate array (FPGA), with which some or all of the functional blocks may be implemented. For example, the processor 1001 may be implemented by using at least one of these hardware.

Also, the notification of information is not limited to the mode/embodiment described in this disclosure and may be made using other methods. For example, the notification of information may be carried out by physical layer signaling (e.g., Downlink Control Information (DCI), Uplink Control Information (UCI), higher layer signaling (e.g., RRC signaling, Medium Access Control (MAC) signaling, notification information (Master Information Block (MIB), System Information Block (SIB)), other signals or a combination thereof. The RRC signaling may also be referred to as an RRC message, e.g., an RRC Connection Setup message, an RRC Connection Reconfiguration message, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc., of each mode/embodiment described in this disclosure may be reordered as long as there is no conflict. For example, the method described in this disclosure uses an illustrative order to present elements of various steps and is not limited to the specific order presented.

The specific operation that is performed by the base station in the present disclosure may be performed by its upper node in some cases. In a network consisting of one or more network nodes with base stations, it is clear that various operations performed for communication with terminals can be performed by the base station and at least one of the other network nodes (For example, but not limited to MME or S-GW) other than the base station. In the above, an example in which there is one network node other than the base station is explained; however, a combination of a plurality of other network nodes (for example, MME and S-GW) may be used.

Information, signals (information, etc.) can be output from an upper layer (or lower layer) to a lower layer (or upper layer). It may be input and output via a plurality of network nodes.

The input/output information can be stored in a specific location (for example, a memory) or can be managed in a management table. Information that is input or output may be overwritten, updated, or appended. The information can be deleted after outputting. The inputted information can be transmitted to another device.

Decisions may be made by a value represented by a single bit (0 or 1), by a truth value (Boolean: true or false), or by comparing numbers (For example, a comparison with a given value).

Each aspect/embodiment described in this disclosure may be used alone, in combination, or switched as execution proceeds. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, if the software is transmitted from a website, server, or other remote source using at least one of wired technology (Coaxial cable, fiber optic cable, twisted pair, Digital subscriber Line (DSL), etc.) and wireless technology (Infrared, microwave, etc.), at least one of these wired and wireless technologies is included within the definition of a transmission medium.

Information, signals, or the like mentioned above may be represented by using any of a variety of different technologies. For example, data, instructions, commands, information, signals, bits, symbols, chips, etc. that may be referred to throughout the above description may be represented by voltage, current, electromagnetic wave, magnetic field or magnetic particle, light field or photon, or any combination thereof.

It should be noted that the terms described in this disclosure and those terms necessary for the understanding of this disclosure may be replaced with terms having the same or similar meanings. For example, at least one of the channels and symbols may be a signal (signaling). Also, the signal may be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

A base station can house one or more (For example, three) cells, also called sectors. In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a base station performing communication services in this coverage and to part or all of the coverage area of at least one of the base station subsystems.

In the present disclosure, the terms "mobile station (Mobile Station: MS)," "user terminal," "user equipment (User Equipment: UE)," "terminal" and the like can be used interchangeably.

A mobile station may be referred to by those skilled in the art as a subscriber station, mobile unit, subscriber unit, radio unit, remote unit, mobile device, radio communication device, remote device, mobile subscriber station, access terminal, mobile terminal, radio terminal, remote terminal, handset, user agent, mobile client, client, or some other appropriate term.

At least one of a base station and a mobile station may be called a transmitting device, a receiving device, a communication device, or the like. Note that, at least one of a base station and a mobile station may be a device mounted on a moving body, a moving body itself, or the like. The mobile may be a vehicle (For example, cars, airplanes, etc.), an unattended mobile (For example, drones, self-driving cars, etc.), or a robot (manned or unmanned). At least one of a base station and a mobile station can be a device that does not necessarily move during the communication operation. For example, at least one of a base station and a mobile station may be an Internet of Things (IoT) device such as a sensor.

The base station in this disclosure may also be read as a mobile station (user terminal, hereinafter the same). For example, each mode/embodiment of this disclosure may be applied to a configuration in which communication between a base station and a mobile station is replaced with communication between multiple mobile stations (For example, it may be called Device-to-Device (D2D), Vehicle-to-Everything (V2X), etc.). In this case, the mobile station may have the function of the base station. In addition, words such as "up" and "down" may be replaced with words corresponding to communication between terminals (For example, "side"). For example, terms an uplink channel, a downlink channel, or the like may be read as a side channel.

Similarly, mobile stations in this disclosure may be replaced with base stations. In this case, the base station may have the function of the mobile station.

A radio frame may consist of one or more frames in the time domain. Each one or more frames in the time domain may be referred to as a subframe.

A subframe may further consist of one or more slots in the time domain. A subframe may have a fixed length of time (For example, 1 ms) independent of numerology.

Numerology may be a communication parameter applied to at least one of the transmission and reception of a signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

Slots may consist of one or more symbols (Orthologous Frequency Division Multiplexing (OFDM)) symbols, Single Carrier Frequency Division Multiple Access (SC-FDMA) symbols, etc., in the time domain. A slot may be a unit of time based on the numerology.

A slot may include a plurality of minislots. Each minislot may consist of one or more symbols in the time domain. A minislot may also be called a subslot. A minislot may be composed of fewer symbols than slots. A PDSCH (or PUSCH) transmitted in units of time larger than the minislot may be referred to as a PDSCH (or PUSCH) mapping type A. A PDSCH (or PUSCH) transmitted using the minislot may be referred to as a PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called the transmission time interval (TTI), multiple consecutive subframes may be called TTI, or one slot or one minislot may be called TTI. That is, at least one of the subframes and TTI may be a subframe (1 ms) in existing LTE, a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

If one slot or one minislot is called a TTI, one or more TTIs (That is, one or more slots or one or more minislots) may be the minimum unit of time for scheduling. In addition, the number of slots (number of minislots) constituting the minimum unit of time for scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTIs that are usually shorter than TTI may be called shortened TTI, short TTI, partial or fractional TTI, shortened subframe, short subframe, minislot, subslot, slot, etc.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

A resource block (RB) is a unit of resource allocation in the time and frequency domains and may include one or more consecutive subcarriers in the frequency domain. The number of subcarriers included in RB may be, for example, twelve, and the same regardless of the topology. The number of subcarriers included in the RB may be determined based on the neurology.

The time domain of the RB may also include one or more symbols and may be one slot, one minislot, one subframe, or one TTI long. One TTI, one subframe, and the like may each consist of one or more resource blocks.

One or more RBs may be referred to as Physical RB (PRB), Sub-Carrier Group (SCG), Resource Element Group (REG), PRB pair, RB pair, and the like.

A resource block may also be composed of one or more Resource Elements (RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be identified by an index of RBs relative to the common reference point of the carrier. PRB may be defined in BWP and numbered within that BWP.

BWP may include UL BWP (UL BWP) and DL BWP (DL BWP). For a UE, one or more BWPs may be set within a carrier.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, configurations such as the number of subframes contained in a radio frame, the number of subframes or slots per radio frame, the number of minislots contained in a slot, the number of symbols and RBs contained in a slot or minislot, the number of subcarriers contained in an RB, and the number of symbols, symbol length, and Cyclic Prefix (CP) length in a TTI can be varied variably.

The terms "connected," "coupled" or any variation thereof mean any connection or combination, directly or indirectly, between two or more elements and may include the presence of one or more intermediate elements between two elements that are "connected" or "coupled" to each other. The connection or connection between elements may be physical, logical or a combination thereof. For example, "connection" may be read as "access." As used in this disclosure, two elements may be considered to be "connected" or "coupled" to each other using at least one of one or more wire, cable and printed electrical connections and, as a few non-limiting and non-comprehensive examples, electromagnetic energy with wavelengths in the radio frequency domain, the microwave domain and the optical (both visible and invisible) domain.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to elements using designations such as "first" or "second" as used in this disclosure does not generally limit the amount or order of those elements. Such designations can be used in the present disclosure as a convenient way to distinguish between two or more elements. Thus, references to the first and second elements do not imply that only two elements can be adopted there or that the first element must in some way precede the second element.

In the present disclosure, the used terms "include," "including," and variants thereof are intended to be inclusive in a manner similar to the term "comprising." Furthermore, the term "or (or)" as used in this disclosure is not intended to be an exclusive OR.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" or "determination" may include regarding some action as "judgment" or "determination." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 Radio communication system
20 NG-RAN
100 gNB
110 Reception unit
120 Transmission unit
130 Control unit
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication device
1005 Input device
1006 Output Device
1007 Bus

## Claims

1. A terminal comprising:
a control unit that applies a target subcarrier spacing lower than a specified subcarrier spacing, in a target frequency band that includes at least a portion of a specified frequency range in which the specified subcarrier spacing is defined as a minimum subcarrier spacing or a frequency band lower than the specified frequency range, wherein
a frequency use efficiency of the target subcarrier spacing is higher than the frequency use efficiency of the specified subcarrier spacing.

2. The terminal according to claim 1, wherein
a ratio of a cyclic prefix length used in the target subcarrier spacing is lower than a ratio of a cyclic prefix length used in the specified subcarrier spacing, or
a number of FFT (Fast Fourier Transform) points used in the target subcarrier spacing is greater than a number of FFT points used in the specified subcarrier spacing.

3. A base station comprising:
a control unit that applies a target subcarrier spacing lower than a specified subcarrier spacing, in a target frequency band that includes at least a portion of a specified frequency range in which the specified subcarrier spacing is defined as a minimum subcarrier spacing or a frequency band lower than the specified frequency range, wherein
a frequency use efficiency of the target subcarrier spacing is higher than the frequency use efficiency of the specified subcarrier spacing.

4. A radio communication system comprising:
a terminal; and
a base station, wherein
the terminal and the base station apply a target subcarrier spacing lower than a specified subcarrier spacing, in a target frequency band that includes at least a portion of a specified frequency range in which the specified subcarrier spacing is defined as a minimum subcarrier spacing or a frequency band lower than the specified frequency range, wherein
a frequency use efficiency of the target subcarrier spacing is higher than the frequency use efficiency of the specified subcarrier spacing.

5. A radio communication method comprising:
a step of applying a target subcarrier spacing lower than a specified subcarrier spacing, in a target frequency band that includes at least a portion of a specified frequency range in which the specified subcarrier spacing is defined as a minimum subcarrier spacing or a frequency band lower than the specified frequency range, wherein
a frequency use efficiency of the target subcarrier spacing is higher than the frequency use efficiency of the specified subcarrier spacing.
